Europäisches Patentamt

European Patent Office

Office européen des brevets

(11) Veröffentlichungsnummer: **0 286 695**
**B1**

(12) **EUROPÄISCHE PATENTSCHRIFT**

(45) Veröffentlichungstag der Patentschrift:
03.10.90

(21) Anmeldenummer: **87105391.4**

(22) Anmeldetag: **11.04.87**

(51) Int. Cl.⁵: **B23D 55/08**, B23D 53/04

(54) Bandsägemaschine.

(43) Veröffentlichungstag der Anmeldung:
**19.10.88 Patentblatt 88/42**

(45) Bekanntmachung des Hinweises auf die Patenterteilung:
**03.10.90 Patentblatt 90/40**

(84) Benannte Vertragsstaaten:
**AT DE FR GB IT**

(56) Entgegenhaltungen:
**WO-A-84/02484**
**DE-A- 3 102 766**
**DE-A- 3 306 747**
**DE-A- 3 539 152**
**DE-C- 2 928 956**
**DE-U- 8 520 626**
**US-A- 3 077 132**
**US-A- 4 127 045**

**PATENT ABSTRACTS OF JAPAN, Band 9,**
**Nr. 135 (M-386)[1858], 11. Juni 1985; & JP - A**
**- 60 16318 (TOSHIO HARA) 28.01.1985**

(73) Patentinhaber: **Trennjaeger Maschinen- u. Sägenfabrik,**
**Rudolf-Diesel-Strasse 1, D-5350 Euskirchen(DE)**

(72) Erfinder: **Jägers, Leopold, Rudolf-Diesel-Strasse 1,**
**D-5350 Euskirchen(DE)**

(74) Vertreter: **Cohausz & Florack Patentanwälte,**
**Postfach 14 01 20 Schumannstrasse 97,**
**D-4000 Düsseldorf 1(DE)**

## Beschreibung

Die Erfindung betrifft eine Bandsägemaschine mit einem etwa waagerechten Sägeblattträger, in dem das endlose Sägeband über zwei Umlenkräder geführt ist und der federnd gelagert ist, wobei der untere, die Sägearbeit leistende Abschnitt des Sägebandes gegenüber den Umlenkrädern durch ein Schwingelement abwechselnd in eine Auf- und Abwärtsbewegung bringbar ist.

Es sind Bandsägemaschinen bekannt, deren umlaufendes Endlossägeband mit parallelem Vorschub arbeitet. Hierbei sind aber zu viele Zähne im Eingriff, so daß der Schnitt zum Verlaufen neigt (DE-C 2 928 956).

Aus der DE-A 3 102 766 ist eine Bandsägemaschine bekannt, bei der der Sägeblattträger sich abwechselnd nach links und rechts neigt und hierdurch einen bogenförmigen Schnitt erzeugt. Dabei ist nur eine bestimmte Zahl von Zähnen im Eingriff. Dieses Verfahren ist konstruktiv aufwendig und für viele Bereiche nicht anwendbar.

Auch hat man Schnittdruckfühler entwickelt, die den Vorschub des Bandes bei Erreichen eines gewissen Druckes abschalten. Aber auch hier bleiben alle Zähne im Eingriff, so daß wiederum keine hohe Schnittgenauigkeit erzielt wird.

Aus dem DE-U 8 520 626 den nächstkommenden Stand der Technik beschreibenden ist eine Bandsägemaschine bekannt, deren Antriebsmittel eine elastische Nachgiebigkeit des Sägeblattträgers zulassen, wobei der untere, die Sägearbeit leistende Abschnitt des Sägebandes gegenüber den Umlenkrädern durch eine Vorrichtung abwechselnd in eine Auf- und Abwärtsbewegung bringbar ist. Die Konstruktion ist aufwendig, zumal ein separater Antrieb erforderlich ist.

Aufgabe der Erfindung ist es, eine Bandsägemaschine zu schaffen, die bei einfacher Konstruktion einen separaten Antrieb zur Erzeugung der Schwingungen des Sägebandes nicht benötigt und deren Schwingbewegungen immer im Verhältnis zur Bandbewegung steht.

Die Aufgabe wird erfindungsgemäß dadurch gelöst, daß das Schwingelement von einem Exzenter oder einer Kurvenscheibe angetrieben ist, der bzw. die mit einem der beiden Umlenkräder verbunden ist, und daß der Exzenter oder die Kurvenscheibe auf der Achse des Umlenkrades befestigt ist.

Die auf der Achse eines Umlenkrades befestigte Kurvenscheibe bzw. Exzenter erzeugt die erforderlichen Schwingbewegungen ohne zusätzlichen Antrieb und stets entsprechend der Bandbewegung, da Exzenterbewegungen und Bandbewegungen unmittelbar gekoppelt sind.

Eine solche Bandsägemaschine sägt problemlos, schnell und mit hoher Genauigkeit unterschiedlichste Profile als auch Vollmaterial verschiedenster Härte. Das Sägeband allein bestimmt die Vorschubgeschwindigkeit, so daß zum Beispiel bei einem neuen scharfen Band schneller und bei einem stumpfen Band langsamer gesägt wird. Auch verändert sich die Vorschubgeschwindigkeit nach der Größe der Querschnittsfläche, die bei dem jeweiligen Profil gesägt wird. Es wird ein weicher Übergang zwischen der Auf- und Abwärtsbewegung beim Vorschub erzeugt und damit wird das Band bzw. werden die Zahnspitzen verhältnismäßig gering beansprucht, so daß sie länger halten und es zu einem Zerstören der Zahnspitzen nicht kommt.

Eine konstruktiv besonders einfache Lösung wird dadurch geschaffen, wenn die Vorrichtung ein den oberen Rand des Sägebandes beaufschlagendes Schwingelement aufweist, das von einem Exzenter oder einer Kurvenscheibe angetrieben ist, der bzw. die mit einem der beiden Umlenkräder verbunden ist. Hierbei kann der Exzenter oder die Kurvenscheibe auf der Achse des Umlenkrades befestigt sein. Ferner kann der Exzenter oder die Kurvenscheibe zur Verstellung des Exzentrizitätsgrades gegenüber der Achse des Umlenkrades radial verschieblich sein. Durch die Verstellbarkeit des Exzenters oder der Kurvenscheibe ist es erreichbar, daß nur so viele Zähne im Eingriff sind wie zur Zerspanung erforderlich ist: Ein Schleifen der Zahnspitzen über das Material ohne zu schneiden, um damit nur abzustumpfen, wird sicher verhindert.

Konstruktiv besonders einfach ist es, wenn das Schwingelement ein zweiarmiger Hebel ist, dessen einer Arm vom Exzenter oder der Kurvenscheibe angetrieben ist. Hierbei kann der andere Arm des zweiarmigen Hebels über eine Stange oder einen Bolzen das Sägeband beaufschlagen. Auch wird vorgeschlagen, daß die Stange oder der Bolzen an einer Unterseite eine Rolle trägt, die auf der Oberseite des Sägebandes anliegt.

Um bei bestimmten Profilen oder zu sägendem Material ein Schwingen abschalten zu können, wird vorgeschlagen, daß das Schwingelement Außereingriff mit dem Exzenter oder der Kurvenscheibe bringbar ist.

Eine sichere Befestigung und ein einfaches als auch exaktes Bewegen des Sägeblattträgers wird dadurch erreicht, daß der Sägeblattträger zu beiden Seiten durch Zugmittel, insbesondere Ketten, gehalten ist, die durch ein Zylinder-Kolben-Aggregat angetrieben sind. Hierbei können, die Zugmittel durch Gewichte beaufschlagt sein, die das Gewicht des Sägeblattträgers etwa aufheben. Vorzugsweise wird hier vorgeschlagen, daß die Zugmittel durch Endlosketten angetrieben sind, die jeweils über zwei Umlenkräder geführt sind und jeweils durch einen Rahmen unterbrochen sind, der von der Kolbenstange eines Zylinder-Kolben-Aggregats auf- und abbewegbar ist. Dies führt zu einem konstruktiv besonders einfachen und genauen Antrieb der Ketten. Vorzugsweise wird hierbei vorgeschlagen, daß der Zylinder des Zylinder-Kolben-Aggregats ortsfest ist. Eine absolut synchrone Bewegung der beiden Seiten des Sägeblattträgers wird dadurch erreicht, daß die Antriebsmittel, insbesondere Ketten, eine obere waagrechte, zum Sägeblattträger parallele Welle antreiben, die über Zugmittel, insbesondere Ketten, den Sägeblattträger halten.

Um eine ausreichende Nachgiebigkeit des Sägeblattträgers nach oben während des Schwingens des Sägebandabschnittes zu erreichen, wird vorgeschlagen, daß zwischen den Zugmitteln und dem Sägeblattträger Federmittel befestigt sind. Dies stellt sicher, daß je nach Höhe des Hubes des Exzenters oder der Kurvenscheibe und dem Abstand der Führungen des Sägebandes die Anzahl der Zähne exakt bestimmbar ist, die im Schnittspalt zur Anwendung kommen. Auch können hierzu mit den Zugmitteln eine oder mehrere Dämpfvorrichtungen direkt oder über Übertragungsmittel verbunden sein.

Vorzugsweise wird vorgeschlagen, daß zu beiden Seiten des Sägeblattträgers je eine Vorrichtung angeordnet ist, die eine Auf und Abwärtsbewegung des Sägebandes erzeugen. Hierdurch läßt sich noch genauer und in stärkerem Maße ein Schwingen des unteren Abschnittes des Sägebandes erreichen. Hierbei wird vorgeschlagen, daß eine der beiden Vorrichtungen vom Exzenter oder Kurvenscheibe eines Umlenkrades und die andere vom Exzenter oder Kurvenscheibe des anderen Umlenkrades angetrieben ist. Auch können die beiden Vorrichtungen wechselseitige Schwingungen des Bandabschnittes erzeugen. Besonders vorteilhaft ist es hierbei, wenn für einen Synchronlauf der Umlenkräder diese über eine umlaufende Endloskette miteinander verbunden sind.

Mehr als eine Schwingung des Sägebandes während eines Umlaufs des Umlenkrades wird dann erzeugt, wenn die Kurvenscheibe zwei oder mehr Erhöhungen aufweist.

Ein Ausführungsbeispiel der Bandsägemaschine ist in Zeichnungen dargestellt und wird im folgenden näher beschrieben. Es zeigen:

Fig. 1 eine Seitenansicht der Maschine
Fig. 2 eine Draufsicht der Maschine
Fig. 3 eine Stirnansicht der Maschine

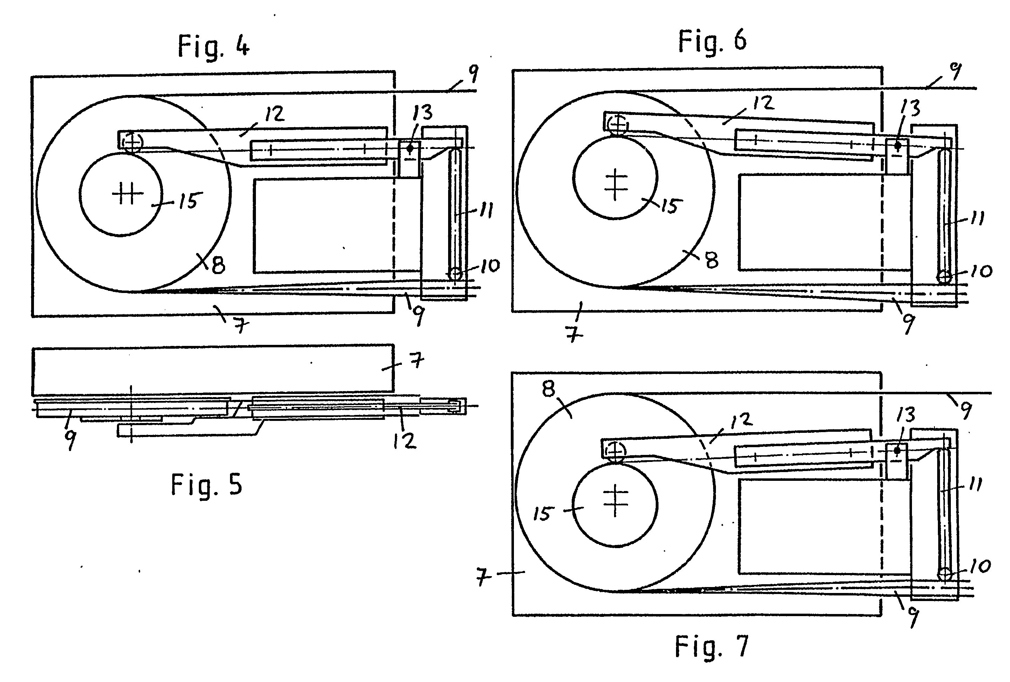

Fig. 4 eine Seitenansicht der Schwinge
Fig. 5 eine Draufsicht der Schwinge
Fig. 6 eine Seitenansicht der Schwinge oben
Fig. 7 eine Seitenansicht der Schwinge unten

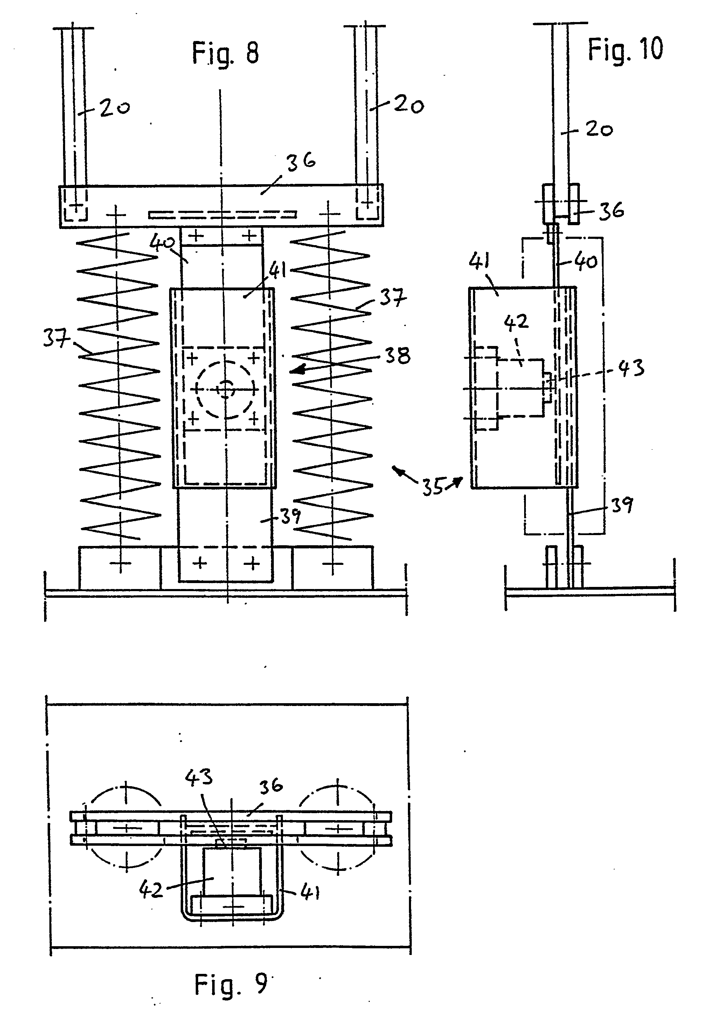

Fig. 8 eine Seitenansicht der elastischen Verbindung zwischen der Kette des Kontergewichtes und dem Maschinenoberteil
Fig. 9 eine Draufsicht der elastischen Verbindung
Fig. 10 eine Stirnansicht der elastischen Verbindung

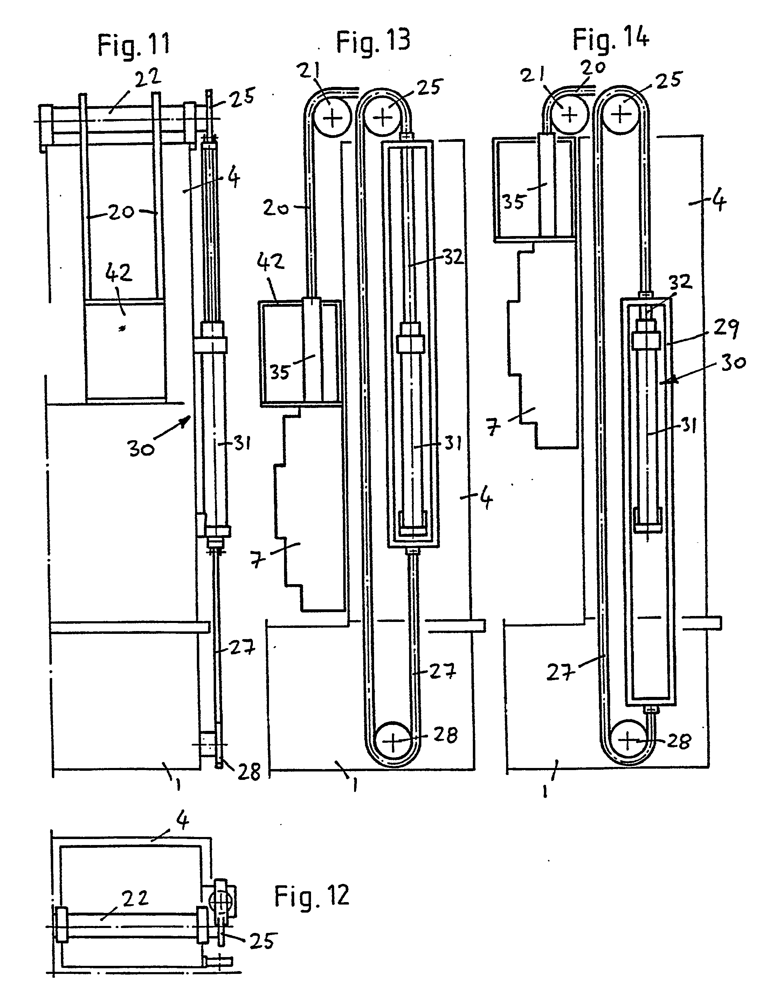

Fig. 11 eine Stirnansicht der Vorschubeinheit
Fig. 12 eine Draufsicht der Vorschubeinheit
Fig. 13 eine Seitenansicht der Vorschubeinheit mit dem Maschinenoberteil unten
Fig. 14 eine Seitenansicht der Vorschubeinheit mit dem Maschinenoberteil oben.

Die Figuren 15-16-17 zeigen die drei verschiedenen Möglichkeiten, durch Ein- bzw. Ausschalten der Schwinge mit der gleichen Zahnteilung im Sägeband drei grundverschiedene Materialsorten zu sägen. Es zeigen:

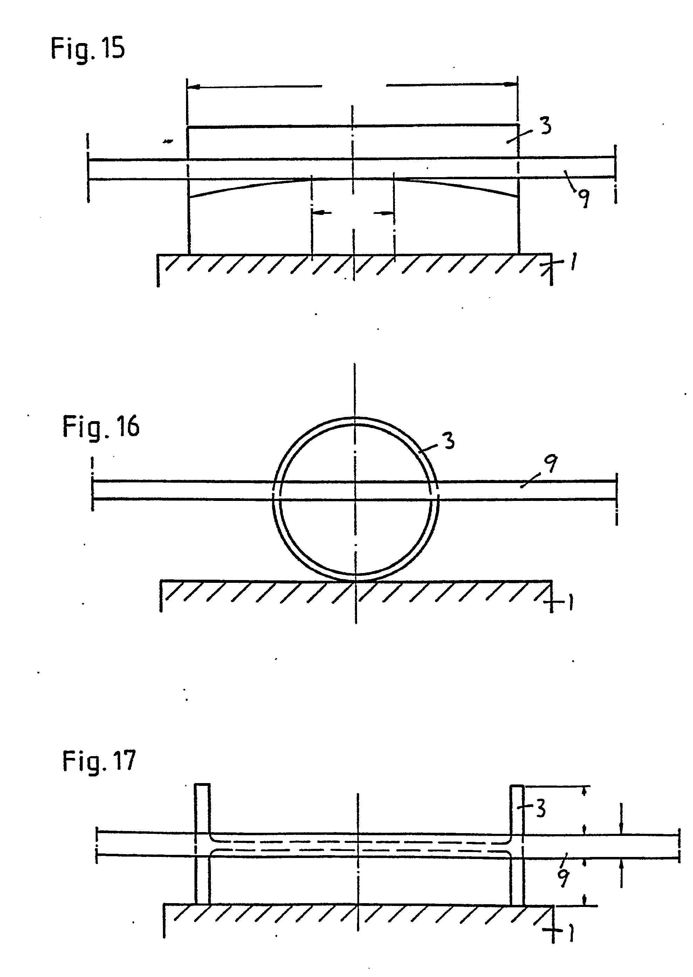

Fig. 15 in 100 %igem Einsatz der Schwinge. Diese ist so eingestellt, daß nur ca. 25 % der Zähne im Einsatz sind.
Fig. 16 im Einsatz 100 % ohne Schwinge
Fig. 17 im teilweisen Einsatz der Schwinge und zwar im mittleren Bereich.

Die Bandsägemaschine besitzt ein Maschinenunterteil (Ständer, Werkzeugtisch) 1, auf dessen waagerechter Oberseite mittels einer Spannvorrichtung 2 ein Werkstück 3, insbesondere ein Profil gehalten wird. Beim Lagenschnitt können durch die Spannvorrichtung eine Reihe von Werkstücke und beim Paketschnitt viele paketierte Werkstücke gehalten werden.

Auf dem Maschinenunterteil 1 ist auf jeder Seite eine rechteckige Säule 4 senkrecht befestigt, die innen ein Kontergewicht 5 senkrecht verschieblich aufnimmt und außen vertikale Längsführungen 6 für einen Sägebandträger besitzt. Ferner befinden sich außen an den Säulen Leisten 8 für die seitliche Abstützung des waagrechten Sägebanddträgers 7.

Der kastenförmige waagerechte Sägeblattträger 7 lagert auf beiden Seiten in gleicher Höhe je ein Umlenkrad 8, dessen Achse waagrecht und parallel zur Vorschubrichtung bzw. zur Längsachse des Werkstücks 3 ist. Über beiden Umlenkrädern 8 läuft ein Sägeband 9, das im unteren Bereich so weit in die etwa senkrechte Lage gedreht wird, daß die Zähne nach unten stehen und damit in das Material des Werksstückes 3 eingreifen können.

Auf der Oberseite bzw., Oberkante des etwa senkrecht stehenden Sägebandes 9 liegt eine Rolle 10 auf, die an der Unterseite einer senkrechten Stange 11 drehbar befestigt ist. Diese Stange 11 ist oben vom freien Ende eines zweiarmigen Hebels (Schwingelement) 12 beaufschlagt, der um die Achse 13 beweglich ist und dessen anderes freies Ende eine Rolle 14 trägt, die auf einem Exzenter 15 aufliegt. Der Exzenter 15 ist auf der Achse 16 eines der beiden Umlenkräder 8 in der Weise radial verschieblich befestigt, daß die Exzentrizität des Exzenters 15 verstellbar ist. Während des Umlaufs des Umlenkrades 8 versetzt der Exzenter 15 den Hebel 12 in Schwingungen, die über die Stange 11 und die Rolle 10 auf das Sägeband 9 übertragen werden. Während dieser Schwingungen kann der Sägeblattträger 7 nach oben begrenzt ausweichen.

Auf der dem Hebel 12 gegenüberliegenden Seite kann am Sägeblattträger 7 ein weiterer Hebel in gleicher Weise am Träger befestigt und vom anderen Umlenkrad 8 angetrieben werden, so daß abwechselnde Schwingungen auf den unteren Bereich des Sägebandes übertragbar sind. Bei einer solchen, nicht dargestellten Ausführung ist es von Vorteil, wenn beide Umlenkräder 8 synchron laufen. Hierzu können die Umlenkräder 8 über eine Endloskette 17 verbunden sein, die durch Räder 18 über das Werkstück 3 geführt sind. Statt des dargestellten Exzenters kann auch eine Kurvenscheibe auf der Welle des Umlenkrades 8 befestigt sein.

Eine solche, mehrere Erhöhungen aufweisende Kurvenscheibe kann zwei oder mehr Schwingbewegungen des Sägebandes während einer Drehung des Umlenkrades 8 erzeugen.

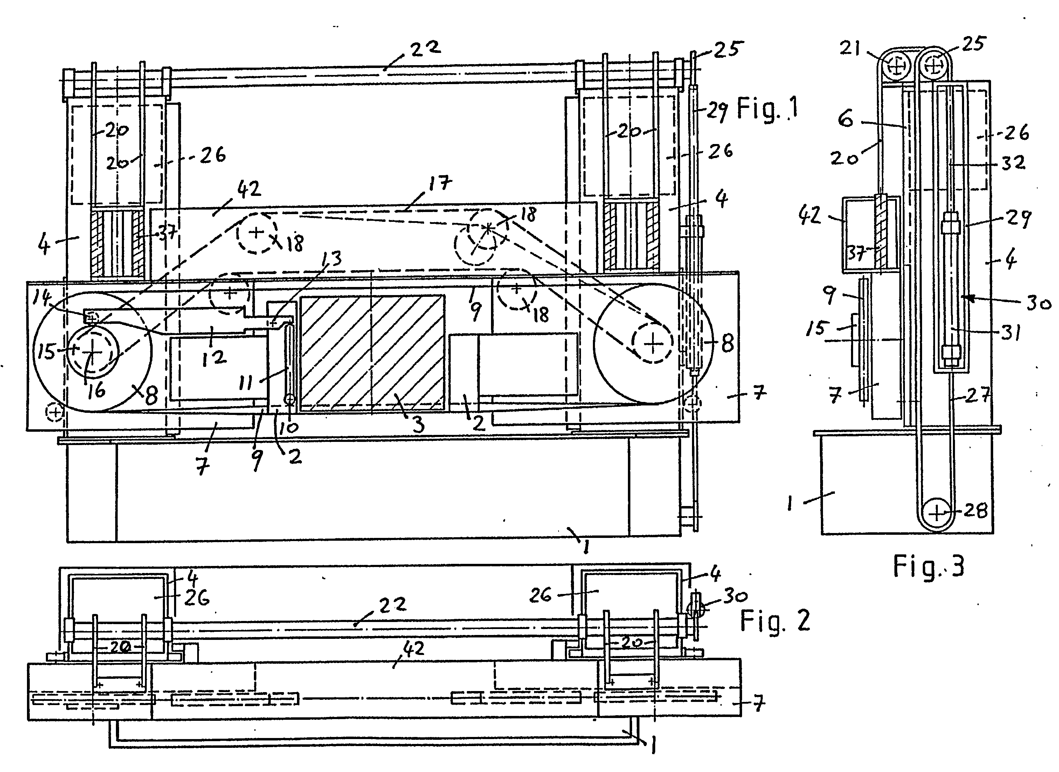

Wie in den Figuren 2 und 3 dargestellt, liegt der Sägeblattträger 7 vor den Säulen 4 und wird auf der Vorderseite dieser zwei Säulen senkrecht verschieblich gelagert. Der Sägeblattträger 7 wird durch vier senkrechte Ketten 20 gehalten, die an der Oberseite des Trägers 7 befestigt sind und oben durch vier Räder 21 umgelenkt sind. Neben den Rädern 21 befindet sich in gleicher Höhe eine waagerechte Welle 22, die wiederum Kettenräder 23 für die Ketten 20 trägt. Durch die Kettenräder 23 sind die vier Ketten 20 (auf jeder Seite des Trägers 7 jeweils zwei Ketten) wieder nach unten geführt und mit ihren Enden auf beiden Seiten je an einem Kontergewicht 26 befestigt, das, wie schon oben erwähnt, jeweils in eine der beiden Säulen 4 senkrecht verschieblich ist. Diese Kontergewichte sind etwas schwerer als der Sägeblattträger 7.

Die waagerechte Welle 22 weist zu ihrem Antrieb an einem Ende ein Kettenrad 25 auf, das das obere Umlenkrad einer senkrechten Endloskette 27 darstellt. Diese Kette 27 ist durch ein weiteres Kettenumlenkrad 28 herumgeführt, das unten am Maschinenunterteil 1 angelenkt ist. Das eine Trum der Kette 27 ist durch einen Rahmen 29 unterbrochen, der eine erheblich größere Höhe als Breite aufweist und an dessen oberem und unterem Ende jeweils die Kette 27 befestigt ist. Innerhalb des Rahmens 29 befindet sich ein Zylinder-Kolben-Aggregat 30, dessen Zylinder 31 ortsfest an einer der beiden Säulen 4 befestigt ist und dessen Kolbenstange 32 den Rahmen 29 senkrecht verschiebt, so daß hierdurch die Kette 27 angetrieben wird.

Auf jeder Seite des Sägeblattträgers 7 wird dieser durch zwei Ketten 20 gehalten. Diese Kettenpaare sind jeweils über eine elastische Verbindung 35 mit dem Sägeblattträger 7 verbunden. Jede dieser zwei elastischen Verbindungen 35 weist einen oberen waagerechten Querträger 36 auf, an dessen zwei Enden die Ketten 20 befestigt sind. An der Unterseite des Querträgers 36 sind zwei Federn 37, insbesondere Schraubenzugfedern mit ihren oberen Enden befestigt, deren untere Enden am Sägeblattträger fest sind. Zwischen diesen zwei senkrechten Federn 37 befindet sich eine Kupplungseinrichtung 38, die zwei senkrechte parallel zueinander geführte Metallblätter 39,40 aufweist, die dicht nebeneinander einander überdeckend liegen und von denen das Blatt 39 am Sägeblattträger 7 befestigt und das Blatt 40 am Querträger 36 befestigt ist. Das Blatt 39 trägt einen Kasten 41, der das Blatt 40 umgibt und in dem ein hydraulischer Zylinder 42 befestigt ist, dessen Kolben 43 das Blatt 40 gegen das Blatt 39 drücken kann, so daß hierdurch die federnde Wirkung der elastischen Verbindung 35 aufhebbar ist.

Zwischen den zwei Kästen 41 befindet sich ein kastenförmiger Aufbau 42, der über dem Sägeblattträger 7 befestigt ist und die Räder 18 als auch die Endlosketten 17 im oberen Bereich aufnimmt.

Wird das Schwingelement 12 durch den Exzenter 15 auf- und abwärts bewegt, so wird entsprechend der untere Bereich des Sägebandes 9 schwingend bewegt, und hierbei kann der federnd aufgehängte Sägeblattträger 7 begrenzt ausweichen. Der Sägeblattträger 7 bewegt sich somit nur parallel auf und nieder, während der untere Abschnitt des Sägebands 9, d.h. der sägende Bereich Schwingungen ausführt, wobei stets nur eine Schwingung während einer Umdrehung des Umlenkrades 8 erfolgt. Diese verhältnismäßig langsamen und gleichmäßigen Schwingungen bzw. Auf- und Abbewegungen eines Endes des sägenden Sägebandbereiches gegenüber dem anderen Ende führen zu einer sehr sauberen Schnittleistung.

In Fig. 15 ist dargestellt, wie Vollmaterial schwingend gesägt wird. Fig. 16 zeigt, daß bei Hohlprofilen meist nicht schwingend gesägt wird, und Fig. 17 zeigt das Sägen eines Doppel-T-Profils. Nur während des Durchtrennens des mittleren Steges schwingt das Sägeband, während die Flansche nicht schwingend gesägt werden.

Gemäß des Abstandes der Führungen zueinander und der Bandspannung wird der über ein Diagramm ablesbare elastische Vorschubdruck eingestellt. Bei Vollmaterialien und besonders bei harten und sehr zäh-harten Metallen wird der Exzenter des Laufrades so weit eingestellt, wie es erforderlich ist, um nur so viele Zähne im Eingriff zu haben, wie zur Zerspanung möglich und erforderlich sind.

Ist zum Beispiel bei einem Stahl von 392,266 N/mm² (40 kg/mm²) Festigkeit die Schnittlänge 500 mm, so würden bei einer Maschine ohne Schwinge zu viele Zähne im Eingriff sein, z.B. bei einem Zahnabstand von 10 mm = 50 Zähne.

Solange das Blatt neu ist, d.h. die Zähne noch nicht abgenutzt sind, wo werden diese 50 Zähne alle zum Eingriff kommen und zwar, bis die Zahnspitzen nicht über die Eindringtiefe abgenutzt sind.

Dieses ist jedoch in der Praxis nicht erreichbar, weil eine Spanlänge von 500 mm mit einer Stärke von 0,1 mm eine Spirale ergibt, die nie und nimmer in die 10 mm breite Zahnlücke passen wird.

Wenn man die 50 Zähne im Abstand von je 10 mm zugrundelegt, so würde ein Span von ca. 0,1 mm pro Zahngruppe, gleich senkrechter Zahn, je ein linker und rechter geschränkter Zahn, eine Anzahl von 16 Zahngruppen ergeben und somit eine Zerspanung von 1,6 mm ergeben.

Bei der Bewegung des Bandes in der Länge des Materials, würden diese 1,6 mm Zerspanung eine utopische, d.h. nicht erreichbare Leistung bedeuten.

Zum Beispiel kann ST 42 mit einer Geschwindigkeit von ca. 60m/Minute geschnitten werden. Dies ergibt 120 x 500 mm pro Minute = 120 x 1,6 mm = 192 mm x 500 mm ergibt 960 cm² pro Minute Schnittfläche. Gebräuchlich dagegen, d.h. erreichbar ist aber nur 50 - 200 cm² Schnittfläche pro Minute.

Die Schnittlänge der einzelnen Zähne bzw. der Zahngruppen kann so weit reduziert werden, daß die abgehobene Spanspirale die Zahnlücke bei z.B. 0,1 mm Spandicke genau ausfüllt. Hierbei kann durch die verkürzte Länge der Berührung des Sägebandes mit dem Material auch der Anpreßdruck des Sägebandes im Verhältnis verringert werden.

Bei einer Schnittlänge von z.B. 500 mm und einer echten Berührung der Zähne von 125 mm würde auch der Schnittdruck sich um 75 % verringern können.

Braucht man z.B. bei herkömmlichen Maschinen bei 500 mm Schnittlänge einen Anpreßdruck von ca. 1569,064 N (160 kg), so kann sich auch der Anpreßdruck um 75 % = 1170,798 N (120 kg) verringern. Dies bedeutet, daß die Durchbiegung des Sägebandes, hervorgerufen durch die Druckrollen in den Bandführungen, um 75 % verringert wird und somit die Gefahr des Verlaufens des Sägebandes ebenfalls um 75%. D.H. Schnitte, die auf einer Maschine nach der Erfindung gemacht werden, haben eine vierfach höhere Chance, Sägeschnitte ohne Verlaufen durchzuführen. Die Aufgabe der Federmittel ist es, zwischen den Kontergewichten und dem Sägeblattträger, einen weichen Übergang zwischen der Auf- und Abwärtsbewegung der Schwinge beim Vorschub zu schaffen, um eine Überbeanspruchung und damit ein Zerstören der Zahnspitzen sicher zu verhindern.

Um eine besondere Leichtgängigkeit der Führungen zu schaffen, ist es von Vorteil, die Führungstaschen am Maschinenoberteil mit hydrostatischen Elementen auszustatten.

## Patentansprüche

1. Bandsägemaschine mit einem etwa waagerechten Sägeblattträger (7), in dem das endlose Sägeband über zwei Umlenkräder geführt ist und der Sägeblattträger federnd gelagert ist, wobei der untere die Sägearbeit leistende Abschnitt des Sägebandes (9) gegenüber den Umlenkrädern (8) durch ein Schwingelement (12) abwechselnd in eine Auf- und Abwärtsbewegung bringbar ist, dadurch gekennzeichnet, dass das Schwingelement (12) von einem Exzenter (15) oder einer Kurvenscheibe angetrieben ist, der bzw. die mit einem der beiden Umlenkräder (8) verbunden ist, und dass der Exzenter (15) oder die Kurvenscheibe auf der Achse (16) des Umlenkrades (8) befestigt ist.

2. Bandsägemaschine nach Anspruch 1, dadurch gekennzeichnet, dass der Exzenter (15) oder die Kurvenscheibe zur Verstellung des Exzentritätsgrades gegenüber der Achse (16) des Umlenkrades (8) radial verschieblich ist.

3. Bandsägemaschine nach Anspruch 1 oder 2, dadurch gekennzeichnet, dass das Schwingelement (12) ein zweiarmiger Hebel ist, dessen einer Arm vom Exzenter (15) oder der Kurvenscheibe angetrieben ist und dass der andere Arm des zweiarmigen Hebels über eine Stange (11) oder einen Bolzen das Sägeband (9) beaufschlagt.

4. Bandsägemaschine nach Anspruch 3, dadurch gekennzeichnet, dass die Stange (11) oder der Bolzen an einer Unterseite eine Rolle (10) trägt, die auf der Oberseite des Sägebandes (9) anliegt.

5. Bandsägemaschine nach einem der vorherigen Ansprüche, dadurch gekennzeichnet, dass zwischen den den Sägeblattträger haltenden Zugmitteln (20) und dem Sägeblattträger (7) Federmittel (37) befestigt sind.

6. Bandsägemaschine nach Anspruch 5, dadurch gekennzeichnet, dass mit den Zugmitteln (20) eine oder mehrere Dämpfvorrichtungen direkt oder über Übertragungsmittel verbunden sind.

7. Bandsägemaschine nach einem der vorherigen Ansprüche, dadurch gekennzeichnet, dass zu beiden Seiten des Sägeblattträgers (7) je ein Schwingelement (12) angeordnet ist, das eine Auf- und Abwärtsbewegung des Sägebandes (9) erzeugt.

8. Bandsägemaschine nach Anspruch 7, dadurch gekennzeichnet, dass eine der beiden Schwingelemente (12) vom Exzenter (15) oder Kurvenscheibe eines Umlenkrades (8) und die andere vom Exzenter oder Kurvenscheibe des anderen Umlenkrades angetrieben ist.

9. Bandsägemaschine nach Anspruch 7 oder 8, dadurch gekennzeichnet, dass die beiden Schwingelemente (12) wechselseitige Schwingungen des Bandabschnittes erzeugen,

10. Bandsägemaschine nach einem der vorherigen Ansprüche, dadurch gekennzeichnet, dass für einen Synchronlauf der Umlenkräder (8) diese über eine umlaufende Endloskette (17) miteinander verbunden sind.

11. Bandsägemaschine nach einem der Ansprüche 1 bis 10, dadurch gekennzeichnet, dass die Kurvenscheibe zwei oder mehr Erhöhungen aufweist.

## Revendications

1. Machine à scier à ruban avec un support de lame de scie (7) sensiblement horizontal, dans lequel le ruban de scie sans fin est guidé par l'intermédiaire de deux roues de renvoi et le support de lame est monté élastiquement, la section inférieure du ruban de scie (9) qui effectue le travail de sciage pouvant être assujettie par un élément oscillant alternativement à un mouvement vers le haut et vers le bas par rapport aux roues de renvoi (8), caractérisée en ce que l'élément oscillant (12) est entraîné par un excentrique (15) ou un disque à came qui est relié à l'une des deux roues de renvoi (8) et que l'excentrique (15) ou le disque à came est fixé sur l'axe (16) de la roue de renvoi 8.

2. Machine à scier à ruban selon la revendication 1, caractérisée en ce que l'excentrique (15) ou le disque à came est coulissant radialement par rapport à l'axe (16) de la roue de renvoi (8) pour le réglage du degré d'excentricité.

3. Machine à scier à ruban selon la revendication, ou 2, caractérisée en ce que l'élément oscillant (12) est un levier à deux bras dont l'un des bras est entraîné par l'excentrique (15) ou le disque à came et que l'autre bras du levier à deux bras agit sur le ruban de scie (9) par l'intermédiaire d'une tige (11) ou d'une cheville.

4. Machine à scier selon la revendication 3, caractérisée en ce que la tige (11) ou la cheville porte sur une face inférieure un rouleau (10) qui est en appui sur la face supérieure du ruban de scie (9).

5. Machine à scier à ruban selon l'une des revendications précédentes, caractérisée en ce que des moyens de ressort (37) sont fixés entre les moyens de traction (20) supportant le support de lame de scie et le support de lame de scie (7).

6. Machine à scier à ruban selon la revendication 5, caractérisée en ce qu'un ou plusieurs dispositifs amortisseurs sont reliés, directement ou par l'intermédiaire de moyens de transmission, aux moyens de traction (20).

7. Machine à scier à ruban selon l'une des revendications précédentes, caractérisée en ce qu'un élément oscillant (12) est disposé sur chacun des deux côtés du support de lame de scie (7) qui produit un déplacement vers le haut et vers le bas du ruban de scie (9).

8. Machine à scier à ruban selon la revendication 7, caractérisée en ce qu'un des deux éléments oscillants (12) est entraîné par l'excentrique (15) ou le disque à came d'une roue de renvoi (8) et l'autre par l'excentrique ou le disque à came de l'autre roue de renvoi.

9. Machine à scier à ruban selon la revendication 7 ou 8, caractérisée en ce que les deux éléments oscillants (12) produisent des oscillations réciproques de la section de ruban.

10. Machine à scier à ruban selon l'une des revendications précédentes, caractérisée en ce que, pour une marche synchrone des roues de renvoi (8), celles-ci sont reliées l'une à l'autre par une chaîne sans fin (17) circulante.

11. Machine à scier à ruban selon l'une des revendications 1 à 10, caractérisée en ce que le disque à came présente deux bosses ou plus.

**Claims**

1. A band saw machine, having a substantially horizontal saw blade carrier (7) in which the endless saw band is guided via two guide wheels and the saw blade carrier is resiliently mounted, the lower portion of the saw band (9), which performs the sawing work, being set alternately in an upward and downward movement in relation to the guide wheels (8) by a rocker element (12), characterized in that the rocker element (12) is driven by an eccentric (15) or a cam disc connected, for example, to one of the two guide wheels (8), and the eccentric (15) or cam disc is attached to the axle (16) of the guide wheel (8).

2. A band saw machine according to claim 1, characterized in that the eccentric (15) or cam disc can be displaced radially to adjust the degree of eccentricity in relation to the axle (16) of the guide wheel (8).

3. A band saw machine according to claims 1 or 2, characterized in that the rocker element (12) is a two-armed lever, one arm of which is driven by the eccentric (15) or cam disc, the other arm of the two-armed lever acting via a rod (11) or a pin on the saw band (9).

4. A band saw machine according to claim 3, characterized in that the rod (11) or pin bears on its underside a roller (10) which bears against the top side of the saw band (9).

5. A band saw machine according to one of the preceding claims, characterized in that spring means (37) are attached between the pulling means (20) retaining the saw blade carrier (7) and the saw blade carrier (7) itself.

6. A band saw machine according to claim 5, characterized in that one or more damping devices are connected directly or via transmission means to the pulling means (20).

7. A band saw machine according to one of the preceding claims, characterized in that a rocker element (12) producing an upward and downward movement of the saw band (9) is disposed on each side of the saw blade carrier (7).

8. A band saw machine according to claim 7, characterized in that one of the two rocker elements (12) is driven by the eccentric (15) or cam disc of one guide wheel (8), the other being driven by the eccentric or cam disc of the other guide wheel.

9. A band saw machine according to claims 7 or 8, characterized in that the two rocker elements (12) produce reciprocal oscillations of the band portion.

10. A band saw machine according to one of the preceding claims, characterized in that for the synchronous running of the guide wheels (8) they are interconnected via a rotating endless chain (17).

11. A band saw machine according to one of claims 1 to 10, characterized in that the cam disc has two or more raised portions.

Fig. 1

Fig. 2

Fig. 3

Fig. 4

Fig. 6

Fig. 5

Fig. 7

EP 0 286 695 B1

EP 0 286 695 B1

Fig. 8

Fig. 10

20

20

20

36

36

40

41

37

37

38

42

43

35

39

39

43

36

42

41

Fig. 9

EP 0 286 695 B1

Fig. 11

Fig. 13

Fig. 14

Fig. 12

Fig. 15

Fig. 16

Fig. 17